(19) Europäisches Patentamt

European Patent Office

Office européen des brevets

(11) **EP 1 209 485 A2**

(12) **EUROPÄISCHE PATENTANMELDUNG**

(43) Veröffentlichungstag:
**29.05.2002 Patentblatt 2002/22**

(51) Int Cl.⁷: **G01S 17/08**, G01S 7/497, G01S 17/89

(21) Anmeldenummer: 01120375.9

(22) Anmeldetag: **25.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **28.11.2000 DE 10058981**

(71) Anmelder: **Valeo Schalter und Sensoren GmbH**
**74321 Bietigheim-Bissingen (DE)**

(72) Erfinder:
• **Hoffsommer, Klaus**
**74321 Bietigheim-Bissingen (DE)**
• **Kiemes, Jochen**
**70499 Stuttgart (DE)**

(74) Vertreter: **Dreiss, Fuhlendorf, Steimle & Becker**
**Patentanwälte,**
**Postfach 10 37 62**
**70032 Stuttgart (DE)**

(54) **Verfahren sowie Vorrichtung zur Erfassung eines Raumbereichs**

(57) Bei einem Verfahren wird ein Raumbereich (13) erfasst, indem von einer Begrenzung (12, 16) des Raumbereichs (13) reflektierte elektromagnetische Strahlung (36, 40) von mindestens einer Kamera (20) erfasst und die entsprechenden Signale in einer Verarbeitungseinrichtung (24) verarbeitet werden. Um die Durchführung des Verfahrens von der Beschaffenheit der Begrenzung (12, 16) des Raumbereichs (13) unabhängig zu machen, wird die elektromagnetische Strahlung (32) von mindestens einer Strahlungsquelle (22) so abgestrahlt, dass sie punkt- und/oder linienförmig auf die Begrenzung (12, 16) des Raumbereichs (13) trifft. Von dort wird die Strahlung unter einem Winkel zur Kamera (20) hin reflektiert. Die reflektierte Strahlung (36, 40) wird von der Kamera (20) erfasst. Die Ist-Position (38) des Reflexionsortes der Strahlung in einer Ebene in etwa senkrecht zur Strahlachse wird relativ zu einer Soll-Position (34) festgestellt. Mittels der Abweichung wird ein Zustand des Raumbereichs (13) bestimmt.

Fig. 3

EP 1 209 485 A2

**Beschreibung**

Die vorliegende Erfindung betrifft zunächst ein Verfahren zur Erfassung eines Raumbereichs, bei dem von einer Begrenzung des Raumbereichs reflektierte elektromagnetische Strahlung von mindestens einer Kamera erfasst und die entsprechenden Signale in einer Verarbeitungseinrichtung verarbeitet werden.

Ein solches Verfahren ist vom Markt her bekannt. Bei ihm werden zwei Kameras eingesetzt, und die Entfernung zwischen den Kameras und dem Zielobjekt bzw. der Begrenzung des Raumbereichs wird durch einen Mustervergleich der von den beiden Kameras aufgenommenen Bildern des gleichen Raumbereiches bestimmt. Letztlich werden dabei die beiden von den Kameras aufgenommenen Bilder zur Überdeckung gebracht und aus dem Winkel, den die beiden Betrachtungsrichtungen der Kameras einschließen, und dem Abstand zwischen den beiden Kameras die Entfernung zur Begrenzung des Raumbereichs berechnet.

Ein solches kamerabasiertes Entfernungsmessverfahren unter Verwendung von sog. Stereobildern hat jedoch verschiedene Nachteile: So setzt die Bestimmung der Entfernung allein durch Mustervergleich voraus, dass von den beiden Kameras solche Muster erkannt werden können. Dies ist z.B. bei homogenen und glatten Oberflächen (wie z.B. lackierten Stoßfängern von Kraftfahrzeugen) nicht der Fall. In solchen Fällen findet das Messsystem keine Charakteristika, welche zur Überdeckung gebracht werden können und anhand welcher die Entfernung bestimmt werden kann. Darüber hinaus sind solche Stereo-Entfernungsmesssysteme relativ aufwändig, da sie grundsätzlich mindestens zwei voneinander beabstandete Kameras erfordern.

Die vorliegende Erfindung hat daher die Aufgabe, ein Verfahren der eingangs genannten Art so weiterzubilden, dass es in unterschiedlichsten Situationen zuverlässig arbeitet und auch die Erfassung eines Raumbereichs, der eine homogene und glatte Begrenzung aufweist, möglich ist.

Diese Aufgabe wird dadurch gelöst, dass elektromagnetische Strahlung von mindestens einer Strahlungsquelle derart abgestrahlt wird, dass sie punkt- und/oder linienförmig auf die Begrenzung des Raumbereichs trifft und von dieser unter einem Winkel zur Kamera hin reflektiert und die reflektierte Strahlung von der Kamera erfasst wird, wobei die Ist-Position des Reflexionsortes der Strahlung relativ zu einer Soll-Position in einer Ebene senkrecht zur Achse des zur Kamera hin weisenden Strahls festgestellt und mittels der Abweichung eine Veränderung vom Sollzustand des Raumbereichs erfasst wird.

Das erfindungsgemäße Verfahren beruht auf folgender Überlegung:

Von einer Strahlungsquelle wird elektromagnetische Strahlung auf die Begrenzung des Raumbereichs abgestrahlt, und zwar so, dass die Strahlung auf der Begrenzung des Raumbereichs ein punkt- und/oder linienförmiges Abbild ergibt. Dabei sei an dieser Stelle bereits darauf hingewiesen, dass unter einem punktförmigen Abbild auch eine bestimmt Form, z.B. ein Kreis, ein Stern usw., verstanden werden kann. Der Auftreffort der Strahlung wird von einer Kamera beobachtet. Die Kamera ist dabei von der Strahlungsquelle beabstandet, d.h. dass die Strahlung von der Begrenzung des Raumbereichs unter einem Winkel zur Kamera hin reflektiert wird.

Für eine bestimmte "Normbedingung" ist der Auftreff- bzw. Reflexionsort der Strahlung auf der Begrenzung des Raumbereichs aus Sicht der Kamera bekannt. Eine solche Normbedingung bedeutet z.B. eine ganz bestimmte Entfernung des anvisierten und angestrahlten Bereichs der Begrenzung des Raumbereichs von der Kamera. Verändern sich nun die tatsächlichen Bedingungen von dieser Normbedingung, verändert sich aus Sicht der Kamera auch der Reflexionsort der Strahlung auf der Begrenzung des Raumbereichs ("aus Sicht der Kamera" bedeutet "in einer Ebene in etwa senkrecht zur Achse des zur Kamera hin weisenden Strahls"). Eine solche Differenz der Ist-Position des Reflexionsorts der Strahlung von der auf die Normbedingung bezogenen Soll-Position wird über die Kamera und die Verarbeitungseinrichtung festgestellt. Aus der Abweichung wiederum kann auf eine Veränderung des Zustands der Begrenzung des Raumbereichs geschlossen werden.

Das erfindungsgemäße Verfahren hat den Vorteil, dass mit ihm die Zustandserfassung eines Raumbereichs unabhängig von der Ausgestaltung der Begrenzung des Raumbereichs möglich ist. Das erfindungsgemäße Verfahren arbeitet z.B. auch dann noch zuverlässig, wenn die Begrenzung des Raumbereichs aus einer verspiegelten Wand besteht (in diesem Fall arbeitet das erfindungsgemäße Verfahren sogar besonders gut, da dann die von der Strahlungsquelle abgestrahlte Strahlung von der Begrenzung besonders gut reflektiert und von der Kamera erfasst werden kann). Darüber hinaus ist zur Durchführung des erfindungsgemäßen Verfahrens nur eine einzige Kamera erforderlich, was die Kosten senkt.

Vorteilhafte Weiterbildungen sind in Unteransprüchen angegeben.

In einer ersten Weiterbildung ist genannt, dass elektromagnetische Strahlung im Lichtbereich, vorzugsweise im Infrarotbereich, verwendet wird. Licht, insbesondere Infrarotlicht, hat z.B. gegenüber Mikrowellenstrahlung den Vorteil, dass es in die den Raumbereich begrenzende Wand nicht eindringt sondern an der Oberfläche vollständig reflektiert wird. Dies erhöht die Genauigkeit des Verfahrens. Darüber hinaus sind Strahlungsquellen, welche Licht aussenden, einfach und preisgünstig realisierbar.

Gemäß einer bevorzugten Ausführungsform wird Laserstrahlung verwendet. Diese hat den Vorteil einer großen Reichweite und der Möglichkeit, kleine Strahlquerschnitte zu realisieren. Dies bedeutet, dass auf der Begrenzung des Raumbereichs ein relativ kleiner und scharf begrenzter Reflexionsort geschaffen werden kann, was ebenfalls die Genauigkeit und Zuverlässigkeit bei der Durchführung des erfindungsgemäßen Verfahrens erhöht.

Besonders bevorzugt ist, dass von der Strahlungsquelle ein Punktmuster auf der Begrenzung des Raumbereichs erzeugt wird. In diesem Fall wird also nicht ein einzelner Strahl auf die Begrenzung des Raumbereichs abgestrahlt, sondern eine Mehrzahl von Strahlen, welche insgesamt ein bestimmtes Muster ergeben. Auf diese Weise ist ein größerer Bereich der Begrenzung des Raumbereichs erfassbar, welcher linienhaft ebenso wie flächig sein kann. Dabei ist die Auflösung der Erfassung umso präziser je enger die Punkte beieinander liegen.

Möglich ist auch, dass von der Strahlungsquelle ein Linienmuster auf der Begrenzung des Raumbereichs erzeugt wird. Die Reflexionsorte sind in diesem Fall linienhaft und ermöglichen eine hohe Auflösung bei der Zustandserfassung des Raumbereichs.

Dabei ist besonders bevorzugt, dass ein bestimmter Strahlungspunkt und/oder eine bestimmte Strahlungslinie durch Abscannen oder Abzählen oder durch sein/ihr zeitliches Auftreten identifiziert wird. Dieser Weiterbildung liegt der Gedanke zugrunde, dass dann, wenn mehrere Reflexionsorte auf der Begrenzung des Raumbereichs vorliegen, wie dies bei einem Punkt- oder Linienmuster der Fall ist, die einzelnen Reflexionsorte eindeutig identifiziert werden müssen, um jeder Soll-Position eines Reflexionsortes die entsprechende Ist-Position zuordnen zu können.

Diese Identifizierung der einzelnen Reflexionsorte kann dadurch erfolgen, dass der von der Strahlungsquelle bestrahlte Bereich der Begrenzung des Raumbereichs von der Kamera abgescannt wird, also die einzelnen Reflexionsorte sequentiell erfasst werden. Möglich ist auch, die einzelnen Reflexionsorte durch Auszählen zu bestimmen. Ferner ist es möglich, die einzelnen Reflexionsorte nacheinander zu erzeugen und sie durch den Zeitpunkt ihres Auftretens zu identifizieren. Weiterhin sei noch darauf hingewiesen, dass eine Identifizierung auch durch die optische Gestaltung eines Strahls möglich ist sowie durch eine individuelle Frequenz oder Amplitude der Strahlung oder eine individuelle Modulation bzw. Codierung.

Bei einer anderen Weiterbildung wird vorgeschlagen, dass bei einer Abweichung der Ist-Position eines Reflexionsortes von seiner Soll-Position die Strahlung von der Strahlungsquelle auf einen Bereich um die Ist-Position des Reflexionsorts konzentriert wird. Dies hat den Vorteil, dass jener Bereich z.B. mit einer höheren Auflösung erfasst wird, in dem eine Abweichung stattfindet, wodurch die Genauigkeit des erfindungsgemäßen Verfahrens nochmals erhöht wird.

Insbesondere dann, wenn elektromagnetische Strahlung im Lichtbereich verwendet wird, kann bei einer hellen Umgebung, z.B. starker Sonneneinstrahlung, der Kontrast der erzeugten Reflexionen gegenüber der Umgebung so gering werden, dass die Kamera die einzelnen Reflexionsorte nicht mehr sicher erfassen kann. Um dies zu verhindern, wird bei einer Weiterbildung vorgeschlagen, dass ein Bild eines Bereichs der Begrenzung des Raumbereichs zu einem Zeitpunkt aufgenommen wird, zu dem von der Strahlungsquelle keine Strahlung abgestrahlt wird, und ein Bild in etwa des gleichen Bereichs der Begrenzung des Raumbereichs zu einem Zeitpunkt aufgenommen wird, zu dem Strahlung von der Strahlungsquelle auf diesen Bereich abgestrahlt wird, und die Differenz der Intensitäten der beiden Bilder gebildet wird, so dass der Signalkontrast verbessert wird.

Für die sichere Durchführung des erfindungsgemäßen Verfahrens ist es wichtig, dass in der Verarbeitungseinrichtung nur jene von der Kamera erfassten Reflexionen verarbeitet werden, die von der der Kamera zugeordneten Strahlungsquelle erzeugt worden sind. Zu diesem Zweck ist es vorteilhaft, wenn die elektromagnetische Strahlung wenigstens zeitweise amplituden- und/oder frequenz- und/oder pulsmoduliert ist und die Verarbeitungseinrichtung den Modulationsscode erkennt. Dabei kann die Impulsmodulation dadurch erfolgen, dass die Impulslänge und/oder der Impulsabstand einen Code bilden.

Weiterhin wird vorgeschlagen, dass Anordnungen von Punkten und/oder Linien, welche bei typischen Formen der Begrenzung des Raumbereichs auftreten, insbesondere bei einer Begrenzung des Raumbereichs durch ein Fahrzeug oder einen Straßenrand, abgespeichert sind und ein Vergleich der tatsächlichen Anordnungen mit den gespeicherten Anordnungen durchgeführt wird, wodurch die Erkennung typischer Formen der Begrenzung des Raumbereichs beschleunigt wird. Diese Weiterbildung beruht auf der Erkenntnis, dass in bestimmten Situationen, z.B. im Straßenverkehr, zumindest ein Bereich der Begrenzung des Raumbereichs immer wieder die gleiche Form aufweisen kann. Beispiele hierfür sind z.B. das Heck eines Fahrzeugs, eine Straßenbegrenzung oder ein Fußgänger. In all diesen Fällen unterscheiden sich die Istpositionen der Reflexionsorte von den Sollpositionen in einer bestimmten und der individuellen Form der Begrenzung entsprechenden Art und Weise. Wenn, wie erfindungsgemäß vorgeschlagen wird, die entsprechenden Anordnungen der Reflexionsorte, also die typischen "Reflexionsmuster", gespeichert sind, können die von der Kamera erfassten Anordnungen der Reflexionspunkte mit diesen gespeicherten Anordnungen verglichen werden und somit bestimmte Situationen, z.B. ein Fußgänger auf der Fahrbahn, erkannt werden.

Besonders vorteilhaft kann das erfindungsgemäße Verfahren dann eingesetzt werden, wenn von der Kamera auch ein visuelles Bild auf einen Monitor übertragen wird. In diesem Fall, in dem ein visuelles Bild mindestens eines Bereichs der Begrenzung des Raumbereichs durch eine Kamera aufgenommen und auf einem Monitor dargestellt wird, kann auf einen Bereich, in dem die Ist-Position der Reflexion der Strahlung von der Soll-Position abweicht, auf dem Monitor in besonderer Weise aufmerksam gemacht werden. Im Beispiel des Straßenverkehrs kann z.B. auf einen sich auf der Fahrbahn befindlichen Fußgänger oder auf ein Verkehrszeichen optisch auf dem Monitor in besonderer Weise hingewiesen werden.

Für die Zuverlässigkeit bei der Durchführung des erfindungsgemäßen Verfahrens ist es wichtig, dass die Erfassung des Zustands des Raumbereichs unabhängig von Verschmutzungen oder anderen Umwelteinflüssen auf der Kamera und/oder der Strahlungsquelle möglich ist. Um dies zu erreichen, wird vorgeschlagen, dass Bilder des gleichen Bereichs der Begrenzung des Raumbereichs, die von der Kamera aus unterschiedlichen Aufnahmerichtungen aufgenommen werden, miteinander verglichen und hierdurch Verschmutzungen und/oder Regentropfen und/oder sonstige optische Fehler auf der Kamera und/oder der Strahlungsquelle herausgefiltert werden.

In die gleiche Richtung zielt jene Weiterbildung des erfindungsgemäßen Verfahrens, bei der das Punktmuster und/oder das Linienmuster über die Begrenzung des Raumbereichs bewegt und von der Kamera die entsprechende Begrenzung des Raumbereichs zu unterschiedlichen Zeitpunkten aufgenommen wird, wobei die Aufnahmen miteinander verglichen und hierdurch Verschmutzungen und/oder Regentropfen und/oder sonstige optische Fehler auf der Kamera und/oder der Strahlungsquelle herausgefiltert werden.

Das erfindungsgemäße Verfahren eignet sich für unterschiedliche Einsatzzwecke. Möglich ist z.B., dass aus der Abweichung der Ist-Position der Reflexion von der Soll-Position der Abstand zwischen einem strahlungsquellen- und/oder kamerafesten Punkt und der Ist-Position der Reflexion ermittelt wird. In diesem Fall wird das Verfahren also zur Entfernungsmessung verwendet. Im Straßenverkehr kann hieraus z.B. ein Fahrbahnprofil und/oder ein Fahrbahnverlauf bestimmt werden. Die hieraus gewonnenen Signale wiederum können für bestimmte Fahrzeugeinrichtungen, wie z.B. Tempomat, Stoßdämpfereinstellung, Stabilitätskontrolle usw., verwendet werden. Möglich ist aber auch mit dem erfindungsgemäßen Verfahren z.B. die Vermessung des Bodenprofils, also eine geodätische Anwendung.

Die Überwachung eines vorgegebenen Raumbereichs ist dann möglich, wenn bei einer Abweichung der Ist-Position der Reflexion von der Soll-Position ein Alarm ausgelöst wird.

Die vorliegende Erfindung betrifft auch eine Vorrichtung zur Erfassung eines Raumbereichs, mit mindestens einer Kamera, welche die von einer Begrenzung des Raumbereichs ausgehende elektromagnetische Strahlung erfasst, und mit einer Verarbeitungseinrichtung, welche die Kamerasignale verarbeitet.

Um die Verwendung der Vorrichtung auch dann möglich zu machen, wenn die Begrenzung des Raumbereichs homogen und glatt ist, wird erfindungsgemäß vorgeschlagen, dass die Vorrichtung mindestens eine Strahlungsquelle umfasst, welche elektromagnetische Strahlung punkt- und/oder linienförmig auf die Begrenzung des Raumbereichs abstrahlt, und die reflektierte Strahlung von der Kamera erfasst wird, wobei die Strahlungsquelle und die Kamera voneinander beabstandet sind und wobei die Verarbeitungseinrichtung so ausgebildet ist, dass sie aus einer Abweichung der Ist-Position des Reflexionsortes der Strahlung von einer Soll-Position in einer Ebene in etwa senkrecht zur Achse der Kamera hin weisenden Strahls einen Zustand des Raumbereichs bestimmt.

Wie bereits oben im Zusammenhang mit dem erfindungsgemäßen Verfahren ausgeführt wurde, kann eine solche Vorrichtung zuverlässig und weitgehend unabhängig von der Ausgestaltung der Begrenzung des Raumbereichs arbeiten.

Bei einer vorteilhaften Weiterbildung der erfindungsgemäßen Vorrichtung umfasst diese eine CMOS-Kamera. Eine solche arbeitet mit einer hohen Frequenz, beispielsweise bis zu 1000 Hz, was eine hohe zeitliche Auflösung bei der Erfassung des Raumbereichs ermöglicht.

Weiterhin ist vorgesehen, dass die Strahlungsquelle einen Lichtprojektor und/oder einen Laser umfasst, welche vorzugsweise im Infrarotbereich arbeiten. Dabei wird besonders bevorzugt, wenn die Strahlungsquelle eine ansteuerbare LCD-Blende umfasst. Mit einer solchen LCD-Blende können auf sehr einfache Art und Weise die gewünschten Punkt- und/oder Linienmuster erzeugt werden. Dabei ist es auf besonders einfache Art und Weise aufgrund der Ansteuerbarkeit der LCD-Blende möglich, die Muster sequentiell aufzubauen, was die Identifizierung der einzelnen Reflexionsorte erleichtert.
Eine weitere bevorzugte Ausführung verwendet einzeln steuerbare Spiegel.

Wenn die Strahlungsquelle und/oder die Kamera schwenkbar sind/ist, ist durch einen Bildvergleich das Herausfiltern von Verschmutzungen oder Regentropfen aus dem von der Kamera erfassten Bild möglich.

Besonders bevorzugt ist eine solche Vorrichtung, welche zur Durchführung des oben genannten Verfahrens geeignet ist.

Die vorliegende Erfindung betrifft weiter eine Mehrzahl von Vorrichtungen der oben genannten Art, bei denen die Strahlung jeder Vorrichtung durch Amplituden- und/oder Frequenz- und/oder Impulsmodulation vorrichtungsspezifisch codiert ist (pro Vorrichtung ist also ein Code vorgesehen). In diesem Fall wird vermieden, dass die Strahlung einer Vorrichtung den Betrieb einer anderen Vorrichtung stört. Dies ist besonders im Straßenverkehr vorteilhaft, wenn sich Fahrzeuge begegnen, welche jeweils mit entsprechenden Vorrichtungen ausgerüstet sind. In diesem Fall ist sichergestellt, dass die Strahlung der Vorrichtung eines jeden Fahrzeugs individuell codiert ist und in der Verarbeitungseinrichtung des jeweiligen Fahrzeugs nur die Strahlung berücksichtigt wird, welche von der eigenen Strahlungsquelle abgestrahlt worden ist.

Die Erfindung betrifft auch ein Fahrzeug, welches eine Vorrichtung der oben genannten Art aufweist.

Nachfolgend wird ein Ausführungsbeispiel der Erfindung unter Bezugnahme auf die beiliegende Zeichnung im Detail erläutert. In der Zeichnung zeigen:

Fig. 1: eine Draufsicht auf eine Straße mit einem Kraftfahrzeug, welches mit einer Vorrichtung zur Erfassung eines Raumbereichs ausgestattet ist;

Fig. 2: eine schematische Darstellung der Vorrichtung zum Erfassen eines Raumbereichs von Fig. 1;

Fig. 3: eine Seitenansicht der Anordnung von Fig. 1;

Fig. 4: eine Darstellung eines Punktmusters, welches von der Vorrichtung aus den Fig. 1 und 2 erzeugt wird; und

Fig. 5: eine Darstellung eines Linienmusters, welches von der Vorrichtung aus den Fig. 1 und 2 erzeugt wird.

Fig. 6: ein schematisches Ablaufdiagramm eines Verfahrens zum Betreiben der Vorrichtung von Fig. 2;

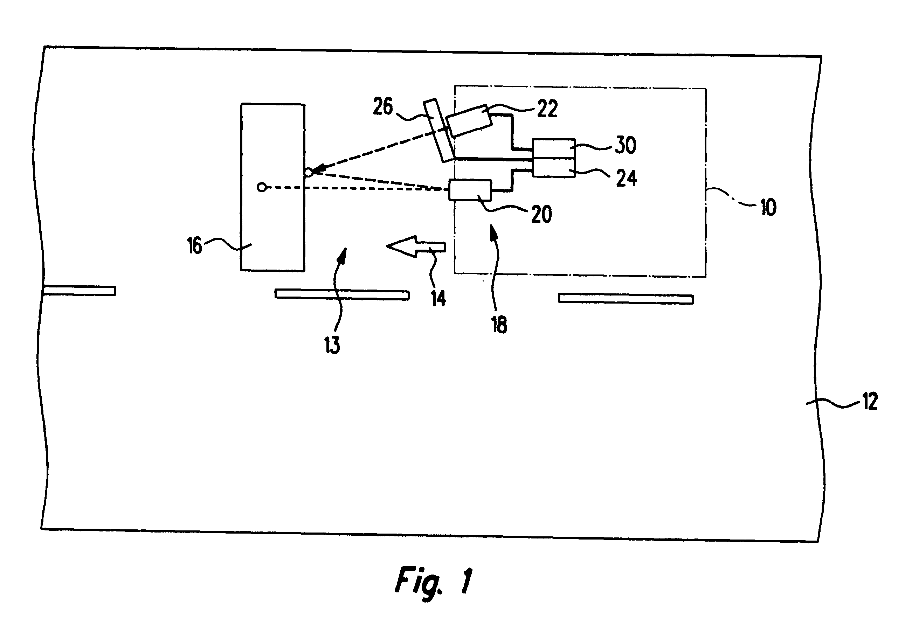

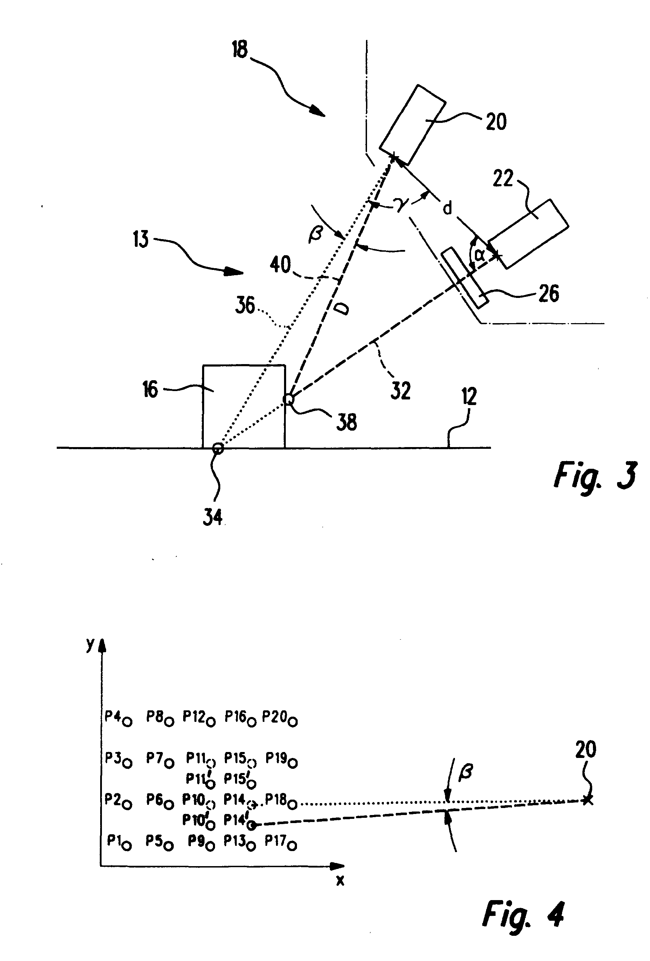

In Fig. 1 trägt ein Kraftfahrzeug insgesamt das Bezugszeichen 10. Es ist vorliegend nur schematisch durch eine strichpunktierte Linie dargestellt. Das Kraftfahrzeug 10 bewegt sich auf einer Straße 12 in Richtung des Pfeiles 14. In Bewegungsrichtung 14 des Kraftfahrzeugs 10 gesehen befindet sich vor diesem ein Raumbereich 13. In diesem liegt ein Hindernis 16 auf der Straße 12, wobei das Hindernis 16 vorliegend als rechteckiger Block angedeutet ist (vgl. auch Fig. 3). In den vorderen Bereich des Kraftfahrzeugs 10 ist eine Vorrichtung 18 eingebaut, mit welcher der Raumbereich, welcher in Bewegungsrichtung 14 des Kraftfahrzeugs 10 gesehen vor dem Kraftfahrzeug 10 liegt, erfasst werden kann. Die Vorrichtung 18 umfasst eine CMOS-Kamera 20, einen eine Strahlungsquelle bildenden Laser 22 und eine Verarbeitungseinrichtung 24, welche einerseits mit dem Laser 22 und andererseits mit der CMOS-Kamera 20 verbunden ist. Vor dem Laser 22 befindet sich eine Strahlungsoptik 26, welche ebenfalls mit der Verarbeitungseinrichtung 24 steuerungstechnisch verbunden ist.

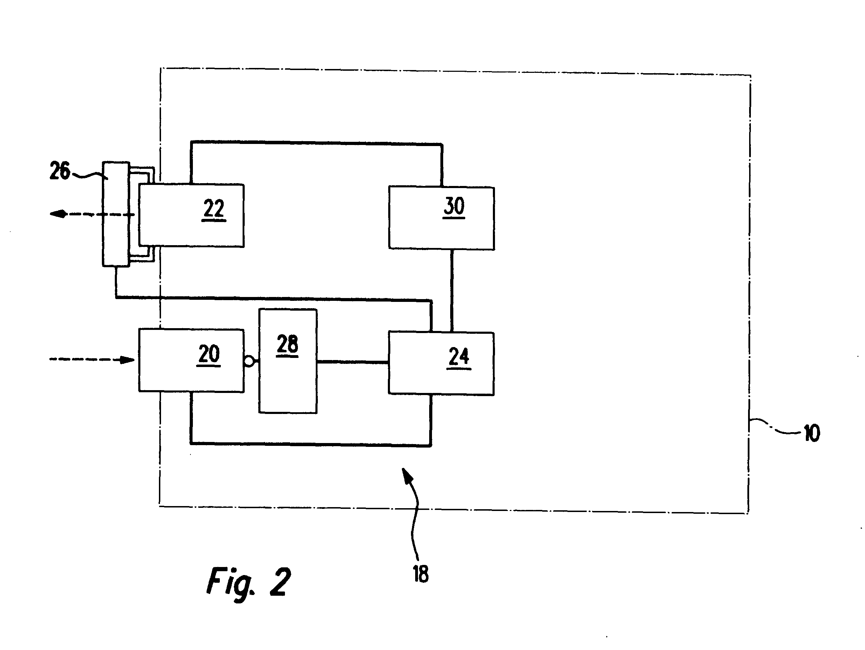

Die Vorrichtung 18 ist in Fig. 2 weiter detailliert: Danach ist die CMOS-Kamera 20 mit einer Schwenkeinrichtung 28 mechanisch verbunden, durch welche die Aufnahmerichtung der CMOS-Kamera 20 verschwenkt werden kann. Die Schwenkeinrichtung 28 selbst ist wiederum mit der Verarbeitungseinrichtung 24 verbunden und wird von dieser angesteuert. Der Laser 22 ist mit einer Lasersteuerung 30 verbunden, mit der z.B. die Frequenz des Laserlichts, also die Farbe des vom Laser 22 ausgestrahlten Lichts, die Amplitude des vom Laser 22 abgestrahlten Lichts, also dessen Helligkeit, sowie Dauer und Abstand der vom Laser 22 abgestrahlten Lichtimpulse gesteuert werden. Die Lasersteuerung 30 ist wiederum mit der Verarbeitungseinrichtung 24 verbunden.

Der Betrieb der Vorrichtung 18 wird nun insbesondere unter Bezugsnahme auf die Fig. 3 - 6 im Detail erläutert:

Zunächst wird auf Fig. 3 Bezug genommen, aus der die geometrischen Zusammenhänge bei der Verwendung der Vorrichtung 18 besonders gut erkennbar sind. Aus Gründen der Übersichtlichkeit sind in Fig. 3 nicht alle Teile der Vorrichtung 18 dargestellt. Vom Laser 22 wird ein Laserstrahl durch die Strahlungsoptik 26 hindurch abgestrahlt. Im Normalfall trifft der Laserstrahl 32 an einem Ort 34 auf die Straße 12. Bei der Straße 12 handelt es sich also um eine Begrenzung des vor dem Laser 22 und der CMOS-Kamera 20 liegenden Raumbereiches 13. Von dem Ort 34 auf der Straße 12 würde im Normalfall der Laserstrahl 32 als Strahl 36 zur CMOS-Kamera 20 hin reflektiert.

Die geometrischen Daten dieses "Normalfalls", welcher in Fig. 3 gepunktet dargestellt ist, sind in der Verarbeitungseinrichtung 24 gespeichert. Die geometrischen Daten können in Koordinaten oder Winkeln oder beispielsweise auch Pixelkennungen der Kamera 20 bestehen, durch die der Ort 34 eindeutig gekennzeichnet ist. Gegebenenfalls können die entsprechenden geometrischen Verhältnisse für den Ort 34 auch abhängig z.B. von der Neigung des Kraftfahrzeugs 10 in der Verarbeitungseinrichtung 24 berechnet werden. Beim Auftreffort 34 des Laserstrahls 32 handelt es sich um eine sogenannte Soll-Position des Reflexionsortes des Laserstrahls 32.

Wenn nun vor dem Kraftfahrzeug 10 ein Hindernis auftaucht, vorliegend z.B. das Hindernis 16, dann trifft der Laserstrahl 32 nicht mehr am Ort 34 auf die Straße 12, sondern an einem Ort 38 auf dieses Hindernis 16. Der Laserstrahl 32 wird nun von diesem Ort 38 zur CMOS-Kamera 20 hin als Strahl 40 reflektiert. Da die CMOS-Kamera 20 vom Laser 22 um die Entfernung d beabstandet ist, wird die Ist-Position 38 des Reflexionsortes des Laserstrahls 32 in der CMOS-Kamera 20 an einer anderen Stelle abgebildet als die Soll-Position 34. Aus Sicht der Kamera 20 hat sich der Reflexionsort in einer Ebene senkrecht zur Achse der zur Kamera 20 hin weisenden Strahlen verändert. Aus dieser Positionsdifferenz wird in der Verarbeitungseinrichtung 24 ein Winkel $\beta$ ermittelt, welcher der Differenz der Einfallswinkel der reflektierten Strahlen 36 bzw. 40 entspricht. Der Abstand D der Ist-Position 38 des Reflexionsortes 38 von der CMOS-Kamera 20 kann nun berechnet werden

nach der Formel:

$$D = (d \cdot sinus\alpha)/(sinus(180-\alpha-(\gamma-\beta))).$$

Bei d handelt es sich um den Abstand zwischen Kamera 20 und Laser 22. $\alpha$ ist der Winkel, der zwischen der Achse des vom Laser 22 ausgesandten Strahls 32 und der Verbindungslinie zwischen Kamera 20 und Laser 22 eingeschlossen ist. $\gamma$ schließlich ist der Winkel zwischen besagter Verbindungslinie und dem vom Soll-Reflexionsort 34 einfallenden Strahl 36. d, $\gamma$ und $\beta$ sind also vorrichtungsspezifisch und bekannt.

Aus Fig. 3 ist ohne Weiteres ersichtlich, dass mit der Vorrichtung 18 die Bestimmung der Entfernung D zwischen der Ist-Position 38 des Reflexionsorts des Laserstrahls 32 und der Kamera 20 unabhängig vom Aussehen der Oberfläche des Hindernisses 16 ist. Mit der Vorrichtung 18 lassen sich auch Entfernungen zu vollständig spiegelnden Oberflächen bestimmen. Durch die Verwendung von Laserlicht wird darüber hinaus sichergestellt, dass die Strahlung an der Oberfläche des Hindernisses 16 reflektiert wird und nicht in das Hindernis 16 eindringt. Um im Betrieb jede Blendwirkung von Personen zu vermeiden, arbeitet der Laser 22 im Infrarot-Bereich.

Bei dem in Fig. 3 dargestellten Ausführungsbeispiel ist der Übersichtlichkeit halber nur ein Laserstrahl 32 dargestellt. Grundsätzlich arbeitet die Vorrichtung 18 zwar auch nur mit einem Laserstrahl 22, wenn jedoch ein größerer Raumbereich 13 überwacht werden soll, ist es vorteilhaft, mehrere Laserstrahlen zu erzeugen, welche an voneinander beabstandeten Orten reflektiert werden. Möglich ist z.B., wie aus Fig. 4 ersichtlich ist, ein Punktmuster zu erzeugen. Dieses Punktmuster kann z.B. dadurch hergestellt werden, dass vom Laser 22 und von der diesem vorgeschaltete Strahlungsoptik 26 sequentiell Laserimpulse an verschiedene Orte P1 - P20 abgestrahlt werden.

In der Verarbeitungseinrichtung 24 werden die von der CMOS-Kamera 20 erfassten Bilder mit der bekannten Abstrahlsequenz verglichen. Dies ermöglicht es, eine erfasste Ist-Position eines Reflexionsortes des Laserstrahls 32 eindeutig zu identifizieren und einer entsprechenden Soll-Position zuzuordnen. Am Beispiel von Fig. 4 bedeutet dies, dass z.B. die Ist-Position P14' nur zu einem ganz bestimmten Zeitpunkt auftreten kann und daher diese Ist-Position P14' eindeutig der Soll-Position P14 zugeordnet werden kann. Es ist somit ausgeschlossen, dass die Ist-Position P14' fälschlicherweise z.B. der Soll-Position P18 zugeordnet wird, da dieser und dem entsprechenden Strahl nämlich ein anderer individueller Zeitpunkt zugeordnet ist. Die eindeutige Identifizierung der einzelnen Reflexionsorte P1 - P20 könnte jedoch in einem anderen Ausführungsbeispiel auch durch Abscannen oder Abzählen erfolgen.

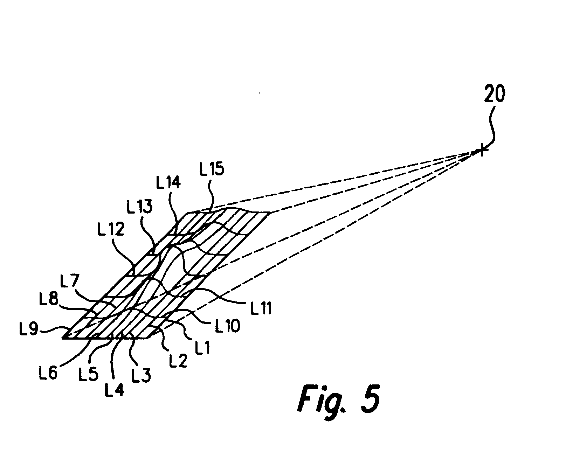

Analog hierzu ist es auch möglich, anstelle eines Punktmusters P1 - P20 ein Linienmuster zu erzeugen. Die Linien eines solchen Linienmusters tragen in Fig. 5 die Bezugzeichen L1 - L15. Auch hier können die einzelnen Linien L1 - L15 durch ihr zeitliches Auftreten identifiziert werden. Möglich ist aber auch, die Linien z.B. durch eine bestimmte Helligkeit (Amplitude) und/oder Farbe (Frequenz) zu kennzeichnen. Auch eine Kennzeichnung bzw. Identifikation durch ein bestimmtes Impulsmuster ist möglich. Das in Fig. 5 dargestellte Linienmuster hat im Vergleich zu dem in Fig. 4 dargestellten Punktmuster den Vorteil, dass die Auflösung der Erfassung innerhalb des erfassten Raumbereiches besser ist, da auf einer Linie L1 - L15 sämtliche Abweichungen der Ist-Position des Reflexionsortes von der Soll-Position erfasst werden. Allerdings ist auch der entsprechende Rechenaufwand in der Verarbeitungseinrichtung 24 größer.

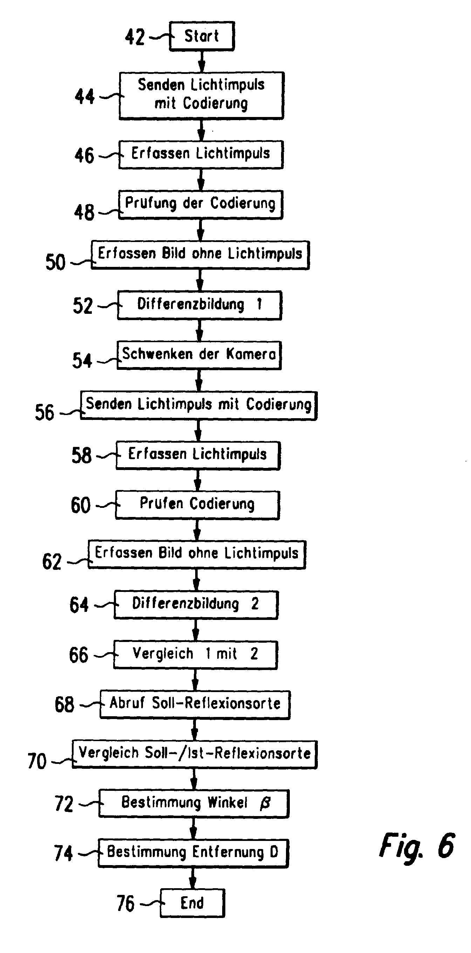

Ein Beispiel für den Betrieb der in den Fig. 1 - 3 dargestellten Vorrichtung 18 ist in Fig. 6 dargestellt:

Danach wird nach einem Startblock 42 ein Lichtimpuls von dem Laser 22 abgestrahlt. Der Lichtimpuls ist dabei mit einer Codierung versehen. Diese Codierung dient dazu, den Lichtimpuls gegenüber solchen Lichtimpulsen unterscheidbar zu machen, welche von anderen Vorrichtungen 18 ausgesendet werden. Dies spielt z.B. eine Rolle, wenn sich zwei Kraftfahrzeuge 10 auf einer Straße 12 begegnen, welche beide mit einer Vorrichtung 18 ausgerüstet sind. Im Block 46 wird der Lichtimpuls erfasst, und im Block 48 wird die Codierung geprüft und festgestellt, ob es sich bei dem erfassten Lichtimpuls um einen vom eigenen Laser 22 ausgesandten Lichtimpuls handelt. Die Codierung des vom Laser 22 abgestrahlten Strahles kann dabei durch eine Frequenz-, eine Ampliduden- und/oder durch eine Impulsmodulation erfolgen. Bei der Impulsmodulation können sowohl die Impulsdauer als auch der Impulsabstand variiert werden.

Anschließend wird im Block 50 von der CMOS-Kamera 20 ein Bild erfasst, ohne dass vom Laser 22 Lichtimpulse abgestrahlt werden. Im Block 52 erfolgt eine Differenzbildung der Intensitäten der beiden Bilder. Das Ergebnis ist ein Bild, bei dem die Umgebungshelligkeit ausgeblendet ist und nur noch das Bild der Ist-Position des Reflexionsortes des Lichtimpulses sichtbar ist. Durch diese Differenzbildung wird der Signalkontrast verbessert, was insbesondere bei sehr hellen Umgebungsbedingungen, z.B. heller Sonneneinstrahlung, die Signalverarbeitung erleichtert.

Nun wird die CMOS-Kamera von der Schwenkeinrichtung 28 etwas geschwenkt (Block 54) und der oben beschriebene Vorgang wiederholt. Es wird also wieder ein Lichtimpuls mit einer entsprechendne Codierung abgestrahlt (Block 56), die Reflexion von der CMOS-Kamera erfasst (Block 58), die Codierung geprüft (Block 60), ein Bild ohne Lichtimpuls erfasst (Block 62) und die Differenz aus den beiden Bildern gebildet. Nun wird das im Block 52 erfasste Bild mit dem in Block 64 erfassten Bild verglichen. Da beide Bilder bei zwar in etwa gleicher Position der CMOS-Kamera 20, jedoch einer etwas unterschiedlichen Blickrichtung der CMOS-Kamera 20 aufgenommen wurden, können auf diese Art und Weise Verschmutzungen und Regentropfen auf der Optik des Lasers 22 und der CMOS-Kamera 20 sowie sonstige optische Fehler herausgefiltert werden. Auch hierdurch wird die Genauigkeit bei der Entfernungsmessung nochmals verbessert.

Nun wird im Block 68 die Soll-Position des Reflexionsortes des Lichtimpulses abgerufen und im Block 70 mit der Ist-Position des Reflexionsortes verglichen. Aus diesem Vergleich wird im Block 72 der Winkel β bestimmt, bei dem es sich um den Winkel zwischen der Einfallsrichtung des von der Soll-Position reflektierten Strahles und der Einfallsrichtung des von der Ist-Position reflektierten Strahls handelt. Im Block 74 wird hieraus und aus den vorrichtungsspezifischen Daten d (Abstand zwischen der CMOS-Kamera 20 und dem Laser 22), α (Winkel zwischen der Strahlachse des vom Laser 22 abgestrahlten Laserstrahls und der Verbindungslinie zwischen CMOS-Kamera 20 und Laser 22) und γ (Winkel zwischen der Einfallsrichtung zur CMOS-Kamera 20 von der Soll-Position 34 des Reflexionsortes und der Verbindungslinie zwischen CMOS-Kamera 20 und Laser 22) die Entfernung D zwischen der CMOS-Kamera 20 und der Ist-Position 38 des Reflexionsortes berechnet. Das Verfahren endet im Block 76.

In einem weiteren, nicht dargestellten Ausführungsbeispiel wird dann, wenn eine Abweichung der Ist-Position eines Reflexionsorts von seiner Soll-Position festgestellt wird, die Strahlung von der Strahlungsquelle auf einen Bereich um die Ist-Position des Reflexionsorts konzentriert. Hierdurch kann die Auflösung im Bereich eines auftretenden Hindernisses erhöht werden. Weiterhin kann in der Verarbeitungseinrichtung ein Speicher vorgesehen sein, in dem typische Anordnungen von Punkten und/oder Linien, welche wiederum bei typischen Formen der Begrenzung des Raumbereichs auftreten, abgespeichert sind. Typische Formen der Begrenzung des Raumbereichs sind z.B. im Falle des Straßenverkehrs das Heck eines Fahrzeugs, ein Fußgänger, ein Fahrradfahrer oder ein Straßenrand. Von der Verarbeitungseinrichtung kann dann ein Vergleich der tatsächlichen erfassten Anordnungen der Reflexionsorte mit den gespeicherten Anordnungen erfolgen, wodurch die Erkennung typischer Formen der Begrenzung des Raumbereichs ermöglicht wird.

In einem ebenfalls nicht dargestellten Ausführungsbeispiel werden die Signale der CMOS-Kamera auch dazu verwendet, ein Bild auf einem Monitor darzustellen. Dabei kann jener Bereich, in dem die Ist-Position der Reflexion der Strahlung von der Soll-Position abweicht, auf dem Monitor in besonderer Weise dargestellt werden. So kann z.B. ein Fußgänger oder ein Fahrradfahrer auf dem Monitor in besonderer Weise dargestellt werden.

Die in den Fig. 1 - 3 dargestellte Vorrichtung 18 kann anstelle zur Entfernungsbestimmung auch zur Überwachung eines Raumbereiches eingesetzt werden, z.B. bei einer Alarmanlage. Kommt es zu einer Abweichung der Ist-Position des Reflexionsortes von der Soll-Position, ist dies ein Indiz dafür, dass sich eine Person im überwachten Raumbereich befindet, was zu einer Alarmauslösung führt.

Anstelle eines Lasers kann auch ein Scheinwerfer verwendet werden. In diesem Falle kann ein Punkt- oder Linienmuster z.B. dadurch erzeugt werden, dass vor dem Scheinwerfer eine LCD-Blende angeordnet wird, welche von der Verarbeitungseinrichtung angesteuert wird.

**Patentansprüche**

1. Verfahren zur Erfassung eines Raumbereichs (13), bei dem von einer Begrenzung (12, 16) des Raumbereichs (13) reflektierte elektromagnetische Strahlung (36, 40) von mindestens einer Kamera (20) erfasst und die entsprechenden Signale in einer Verarbeitungseinrichtung (24) verarbeitet werden, **dadurch gekennzeichnet, dass** elektromagnetische Strahlung (32) von mindestens einer Strahlungsquelle (22) derart abgestrahlt wird, dass sie punkt- und/oder linienförmig auf die Begrenzung (12, 16) des Raumbereichs (13) trifft und von dieser unter einem Winkel zur Kamera (20) hin reflektiert und die reflektierte Strahlung (36, 40) von der Kamera (20) erfasst wird, wobei die Ist-Position (38) des Reflexionsortes der Strahlung in einer Ebene in etwa senkrecht zur Strahlachse relativ zu einer Soll-Position (34) festgestellt und mittels der Abweichung eine Veränderung vom Sollzustand des Raumbereichs (13) erfasst wird.

2. Verfahren nach Anspruch 1, **dadurch gekennzeichnet, dass** elektromagnetische Strahlung im Lichtbereich, vorzugsweise im Infrarotbereich, verwendet wird.

3. Verfahren nach einem der Ansprüche 1 oder 2, **dadurch gekennzeichnet, dass** die Strahlung von einem Laser (22) erzeugt wird.

4. Verfahren nach einem der vorhergehenden Ansprüche, **dadurch gekennzeichnet, dass** von der Strahlungsquelle (22) ein Punktmuster (P1 - P20) auf der Begrenzung (12, 16) des Raumbereichs (13) erzeugt wird.

5. Verfahren nach einem der vorhergehenden Ansprüche, **dadurch gekennzeichnet, dass** von der Strahlungsquelle (22) ein Linienmuster (L1 - L15) auf der Begrenzung (12, 16) des Raumbereichs (13) erzeugt wird.

6. Verfahren nach einem der Ansprüche 4 oder 5, **dadurch gekennzeichnet, dass** ein bestimmter Strahlungspunkt (P1 - P20) und/oder eine bestimmte Strahlungslinie (L1 - L15) durch Abscannen oder Abzählen oder durch sein/ihr zeitliches Auftreten identifiziert wird.

7. Verfahren nach einem der Ansprüche 4 bis 6, **dadurch gekennzeichnet, dass** bei einer Abweichung der Ist-Position eines Reflexionsorts von seiner Soll-Position die Strahlung von der Strahlungsquelle auf einen Bereich um die Ist-Position des Reflexionsorts konzentriert wird.

8. Verfahren nach einem der vorhergehenden Ansprüche, **dadurch gekennzeichnet, dass** ein Bild eines Bereichs der Begrenzung (12, 16) des Raumbereichs (13) zu einem Zeitpunkt aufgenommen wird, zu dem von der Strahlungsquelle (22) keine Strahlung abgestrahlt wird, und ein Bild in etwa des gleichen Bereichs der Begrenzung (12, 16) des Raumbereichs (13) zu einem Zeitpunkt aufgenommen wird, zu dem Strahlung von der Strahlungsquelle (22) abgestrahlt wird, und die Differenz der Intensitäten der beiden Bilder gebildet wird, so dass der Signalkontrast verbessert wird.

9. Verfahren nach einem der vorhergehenden Ansprüche, **dadurch gekennzeichnet, dass** die abgestrahlte elektromagnetische Strahlung (32) wenigstens zeitweise amplituden- und/oder frequenz- und/oder pulsmoduliert ist und die Verarbeitungseinrichtung (24) den Modulationscode erkennt.

10. Verfahren nach Anspruch 9, **dadurch gekennzeichnet, dass** die Impulslänge und/oder der Impulsabstand einen Code bilden.

11. Verfahren nach einem der Ansprüche 4 bis 10, **dadurch gekennzeichnet, dass** Anordnungen von Punkten und/oder Linien, welche bei typischen Formen der Begrenzung des Raumbereichs auftreten, insbesondere bei einer Begrenzung des Raumbereichs durch ein Fahrzeug oder einen Straßenrand, abgespeichert sind und ein Vergleich der tatsächlichen Anordnungen mit den gespeicherten Anordnungen durchgeführt wird, wodurch die Erkennung typischer Formen der Begrenzung des Raumbereichs ermöglicht wird.

12. Verfahren nach einem der vorhergehenden Ansprüche, **dadurch gekennzeichnet, dass** ein visuelles Bild mindestens eines Bereichs der Begrenzung des Raumbereichs durch eine Kamera aufgenommen und auf einem Monitor dargestellt wird und auf einen Bereich, in dem die Ist-Position der Reflexion der Strahlung von der Soll-Position abweicht, auf dem Monitor in besonderer Weise aufmerksam gemacht wird.

13. Verfahren nach einem der vorhergehenden Ansprüche, **dadurch gekennzeichnet, dass** Bilder des gleichen Bereichs der Begrenzung (12, 16) des Raumbereichs (13), die von der Kamera (20) aus unterschiedlichen Aufnahmerichtungen aufgenommen werden, miteinander verglichen und hierdurch Verschmutzungen und/oder Regentropfen und/oder sonstige optische Fehler an der Kamera (20) und/oder der Strahlungsquelle (22) herausgefiltert werden.

14. Verfahren nach einem der vorhergehenden Ansprüche, **dadurch gekennzeichnet, dass** das Punktmuster und/oder das Linienmuster über die Begrenzung des Raumbereich bewegt und von der Kamera die entsprechende Begrenzung des Raumbereichs zu unterschiedlichen Zeitpunkten aufgenommen wird, wobei die Aufnahmen miteinander verglichen und hierdurch Verschmutzungen und/oder Regentropfen und/oder sonstige optische Fehler an der Kamera und/oder der Strahlungsquelle herausgefiltert werden.

15. Verfahren nach einem der vorhergehenden Ansprüche, **dadurch gekennzeichnet, dass** aus der Abweichung der Ist-Position (38) des Reflexionsortes von der Soll-Position (34) der Abstand (D) zwischen einem strahlungsquellen- und/oder kamerafesten Punkt und der Ist-Position (38) des Reflexionsortes ermittelt wird.

16. Verfahren nach einem der vorhergehenden Ansprüche, **dadurch gekennzeichnet, dass** bei einer Abweichung der Ist-Position der Reflexion von der Soll-Position ein Alarm ausgelöst wird.

17. Vorrichtung (18) zur Erfassung eines Raumbereichs (13), mit mindestens einer Kamera (20), welche die von einer Begrenzung (12, 16) des Raumbereichs (13) ausgehende elektromagnetische Strahlung (36, 40) erfasst, und mit einer Verarbeitungseinrichtung (24), welche die Signale der Kamera (20) verarbeitet, **dadurch gekennzeichnet, dass** sie mindestens eine Strahlungsquelle (22) umfasst, welche elektromagnetische Strahlung (32) punkt- und/oder linienförmig auf die Begrenzung (12, 16) des Raumbereichs (13) abstrahlt, und die reflektierte Strahlung (36, 40) von der Kamera (20) erfasst wird, wobei die Strahlungsquelle (22) und die Kamera (20) voneinander um eine Entfernung (d) beabstandet sind und wobei die Verarbeitungseinrichtung (24) so ausgebildet ist, dass sie aus einer Abweichung der Ist-Position (38) des Reflexionsortes der Strahlung (32) von einer Soll-Position (34) in einer Ebene in etwa senkrecht zur Achse des zur Kamera (22) hin weisenden Strahls (36) einen Zustand des Raumbereichs (13) bestimmt.

**18.** Vorrichtung nach Anspruch 17, **dadurch gekennzeichnet, dass** sie eine CMOS-Kamera (20) umfasst.

**19.** Vorrichtung nach einem der Ansprüche 17 oder 18, **dadurch gekennzeichnet, dass** die Strahlungsquelle einen Lichtprojektor und/oder einen Laser (22) umfasst, welche vorzugsweise im Infrarotbereich arbeiten.

**20.** Vorrichtung nach Anspruch 19, **dadurch gekennzeichnet, dass** die Strahlungsquelle eine ansteuerbare LCD-Blende umfasst.

**21.** Vorrichtung nach einem der Ansprüche 17 bis 20, **dadurch gekennzeichnet, dass** die Strahlungsquelle und/oder die Kamera (20) schwenkbar sind/ ist.

**22.** Vorrichtung nach einem der Ansprüche 17 bis 21, **dadurch gekennzeichnet, dass** sie zur Durchführung des Verfahrens nach einem der Ansprüche 1 bis 16 geeignet ist.

**23.** Mehrzahl von Vorrichtungen (18) nach einem der Ansprüche 17 bis 22, **dadurch gekennzeichnet, dass** die Strahlung jeder Vorrichtung (18) durch Amplituden- und/oder Frequenz- und/oder Impulsmodulation individuell codiert ist.

**24.** Fahrzeug, insbesondere Kraftfahrzeug (10), **dadurch gekennzeichnet, dass** es eine Vorrichtung (18) nach einem der Ansprüche 17 bis 23 aufweist.

Fig. 1

Fig. 2

Fig. 3

Fig. 4

Fig. 5

42 — Start

44 — Senden Lichtimpuls mit Codierung

46 — Erfassen Lichtimpuls

48 — Prüfung der Codierung

50 — Erfassen Bild ohne Lichtimpuls

52 — Differenzbildung 1

54 — Schwenken der Kamera

56 — Senden Lichtimpuls mit Codierung

58 — Erfassen Lichtimpuls

60 — Prüfen Codierung

62 — Erfassen Bild ohne Lichtimpuls

64 — Differenzbildung 2

66 — Vergleich 1 mit 2

68 — Abruf Soll-Reflexionsorte

70 — Vergleich Soll-/Ist-Reflexionsorte

72 — Bestimmung Winkel $\beta$

74 — Bestimmung Entfernung D

76 — End

*Fig. 6*